# EUROPEAN PATENT SPECIFICATION

(11) **EP 0 983 838 B1**
(45) Date of publication and mention of the grant of the patent: **28.12.2005**
(21) Application number: 99108336.1
(22) Date of filing: 28.04.1999
(51) Int. Cl.: B29D 11/00

(54) **Method for preparation of colored contact lens with a dazzling appearance**
Verfahren zur Herstellung von gefärbten Kontakt-Linsen mit einem blendenden Erscheinungsbild
Procédé pour la fabrication de lentilles de contact colorés avec un aspect éblouissant

(30) Priority: 02.09.1998 US 145653
(43) Date of publication of application: 08.03.2000
(73) Proprietor: INNOVA, Inc, Hsinchu (TW)
(72) Inventor: Wang, Joe, Hsinchu (TW)
(74) Representative: Winter, Brandl, Fürniss, Hübner Röss, Kaiser, Polte Partnerschaft Patent- und Rechtsanwaltskanzlei

(56) References cited:
- GB-A- 1 004 424
- US-A- 4 639 105
- US-A- 4 666 640
- US-A- 5 034 166

## Description

### FIELD OF THE INVENTION

The present invention relates to a method for preparation of a colored contact lens with a dazzling appearance, especially to a method to prepare a contact lens with pigments embedded and distributed within the lens material, such that the lens has a dazzling appearance.

### BACKGROUND OF THE INVENTION

The contact lens is a useful vision correction instrument for people having defects in vision. The contact lens makes it possible for a person to avoid the inconvenience of the glasses.

A method for the mass production of the contact lens is called "spincasting". It was invented by a Czech company, Ceskoslovenska Akademie Ved, in 1961 and was patented in USA with the patent number of 3,660,545. The spincasting technology was later developed and was widely adopted in the industry. After polymers were used as materials of the contact lens, the manufacture cost of the contact lens was dramatically reduced. As a result, disposable contact lenses are possible and widely used by the consumers. Recently contact lenses with colored appearance were created. The color contact lens functions as a vision correction instrument and a facial adornment.

US patent application series number 07/430,222 (assigned to Schering Corporation and corresponding to WO-A-91 06 886) related to a colored contact lens having very natural appearance. This invention disclosed a lens having a non-opaque pupil section and an iris section that is at least partially opaque and comprised of two portions. The portions and sections of the contact lens contained shades with different patterns and colors so to provide a very natural appearance.

In the above and other inventions for the colored contact lens, the inventors tried to provide contact lenses with patterns that made the iris of the wearers to perform a natural appearance. In the preparation of the colored contact lens, one or more pigments were printed to the convex surface of the contact lens to form a particular pattern. If more than one pigment is used, the pigments were printed in sequence, with one pigment
overlapping or non-overlapping with another. A contact lens so prepared has an extruded pigment layer on its convex surface. Sometimes the thickness of the pattern is several times that of one pigment layer.

Although the thickness of the pigment layer may be very thin (e.g., 0.01 mm - 0.08 mm), wearer of the contact lens so prepared may feel the existence of the pigment layer(s). In order to avoid damages to the eyes of the wearer, the conventional art used pigments containing non-organic minerals, such as TiO₂. Although the diameter of the mineral particles may be up to about 5 µm, the pigment may peel off in piece under the friction of the eyelid. The peeled pigment pieces may also cause damages to the cornea of the wearer.

In addition to this, although a natural appearance may be desirable to wearers of the contact lens, non-natural appearance may be more decorative or fancy to the wearers. In the conventional art, a colored contact lens has a determined pattern. Such pattern may not satisfy the consumers' needs, when they prefer a contact lens with an unexpected pattern.

In US-A-5 034 166, there is disclosed a method for the preparation of colored contact lenses, wherein a colored liquid being composed of a vehicle and a colorant, is applied by various methods onto a concave surface of a mold and is subjected to partial or total cure before a polymerizable liquid lens-forming mixture is added. Said lens-forming mixture, before polymerisation has finished, is brought into its final form by spin-casting, for example. By this method, various well-defined patterns are achieved which are located within the surface region of the lens.

In US-A-4 666 640, a method of spin casting gradient light absorbing contact lenses is disclosed. According to this method, a liquid lens monomer together with a light absorption material having a specific gravity heavier than the liquid lens monomer are placed in a concave lens mold, wherein the heavier light absorbing material is allowed to settle to the bottom of the mold. Thereafter, the mold is set into rotation such that the lens is provided with its final shape and the absorbing material is spread out.

In GB-A-1 004 424, a method of manufacturing a colored contact lens is disclosed, wherein a suitable coloured pattern is brought onto the surface of the lens by various procedures, or a dyestuff or pigment is added into a mixture of monomers together with respective polymerisation admixtures, followed by a polymerisation step.

It is thus a need in the industry to have a colored contact lens to provide an unexpected appearance to the irises of the wearer. It is also a need to have a colored contact lens where pigment may not damage the eyeballs of the wearers.

### OBJECTIVES OF THE INVENTION

Objective of this invention is to provide a method for the preparation of the above contact lenses.

### SUMMARY OF THE INVENTION

The method for the preparation of colored contact lenses according to the invention is defined in claims 1 and 3. Preferred embodiments are defined in the dependent claims.

Pigments are first printed to the plastic mold for the contact lens with a pad printer so that the pigments are distributed on the concave surface of the plastic mold. According to pad printing, the design to be printed is etched into a flat block, the so-called printing plate. This etching is filled with ink by an inking mechanism. A smooth flexible rubber pad (hence: pad printing) takes up the most of the ink from the plate and transfers it to the components to be printed. Material for the lens is then dropped onto the concave surface of the plastic mold. The mold then spins in a determined speed for a determined period of time, such that the lens material is spread on the concave surface of the plastic mold, whereby a desired radius surface is formed. During the spinning of the plastic mold, the pigments are driven to be distributed inside the lens material due to the centrifugal force so generated. The distribution of the pigment particles is decided according to the diameters of the particles, such that a dazzling appearance may be obtained. The lens is then solidified under a UV lamp. A contact lens so prepared comprises pigments buried and distributed inside the lens and the pigments will not slid to the environment.

The above and other objectives and advantages may be clearly understood from the detailed description by referring to the following drawings.

### IN THE DRAWINGS

Fig. 1 illustrates the flow chart of the method for preparation of colored contact lenses with a dazzling appearance of the invention.
Fig. 2 illustrates the steps of the method for preparation of colored contact lenses with a dazzling appearance of the invention wherein (a) shows a plastic mold applied with pigments, (b) shows a colored contact lens with a dazzling appearance being prepared and (c) shows a colored contact lens with a dazzling appearance prepared from the method of this invention.

### DETAILED DESCRIPTION OF THE INVENTION

In the conventional art, materials for the contact lens include hydrophilic high molecular polymers, sometimes called hydro gel. The materials include hydroxyethyl methacrylate (HEMA). The pigment may comprise a pigment composition, which comprises a pigment, a dispersing agent and a binding polymer.

The inventor has found that the partial compatibility of the pigment composition and the lens material, the pigment composition printed to the convex surface of the lens may be insolvent into the lens material. While the plastic mold is spun, the pigment is distributed inside the lens material and form a dazzling appearance. Since the pigment composition is embedded inside the lens material, the pattern will not be damaged during the stripping operation of the lens or by the eyelid of the wearer.

The following is a detailed description of the contact lens, its preparation method and its pigments.

In the preparation of the contact lens of this invention, a pigment composition is first prepared. The pigment composition comprises a dispersing agent, a binding polymer and at least one pigment.

Suited dispersing agents for this invention include: monomers or pre-polymers of an acrylic resin and other suited dispersing agents. Examples include: hydroxyethyl methacrylate (HEMA), hydroxypropyl methacrylate (HPMA), methyl methacrylate (MMA) and glyceryl methacrylate (GMA) etc.

Suited binding polymers for this invention include: acrylic emulsified pre-polymers, hydroxyethyl methacrylate (HEMA), EOEMA (2- ethoxyethyl methacrylate), methylacrylic acid (MAA) and isopropanol (IPA). Functions of the binding polymers include to generating hydrogen bond or van der Waals' force between the lens material and the pigments, such that the combination may be strengthened.

Suited pigments include CI. Pigment white 6, C.I. pigment blue 15:4, C.I. pigment green 7, C.I. pigment violet 23, C.I. pigment yellow 42 and C.I. pigment Brown.

In the embodiments of the present invention, the pigment composition may be composed according to the actual needs. Table I illustrates possible combinations of pigments that are applicable in the present invention. Other pigments, combinations and ratios may also be used in this invention and provide similar effects. In this table, other components of the pigment composition are also shown for reference.

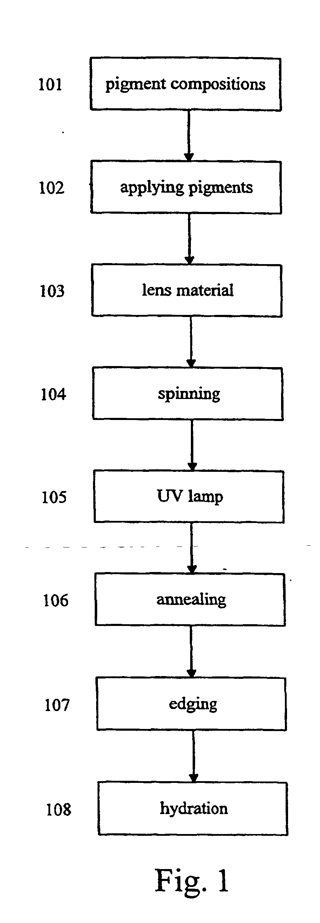

The following is a description of an embodiment of the method for preparation of colored contact lens with a dazzling appearance of this invention. Fig. 1 illustrates the flow chart for an embodiment of the method for preparation of colored contact lens with a dazzling appearance of this invention.

As shown in this figure, in the preparation of a colored contact lens with a dazzling appearance, a pigment composition 2 is first prepared at 101. In the embodiments of this invention, the pigment compositions 2 may be that as shown in Table I. At 102 the pigment composition 2 is printed onto the concave surface of a plastic mold 1. A distribution of the pigment composition or a pattern is then formed on the concave surface of the plastic mold 1. Here, several pigment compositions may be applied to the plastic mold in sequence to provide a number of colors to the colored contact lens. For purpose of convenience, the applied pigments may be less than three kinds. Of course, more than three pigments may be applied, if desirable.

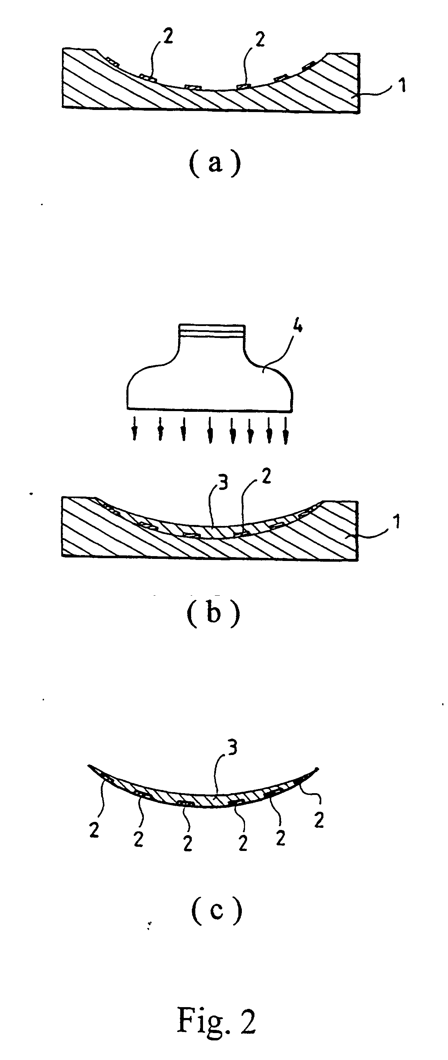

Fig. 2 illustrates the steps of the method for preparation of colored contact lens with a dazzling appearance of the invention. In fig. 2, (a) shows a plastic mold 1 applied with pigments 2.

At 103 a certain quantity of lens material 3 is dropped into the concave surface of the plastic mold 1. In some embodiments of this invention, the plastic mold is made of PVC (polyvinyl chloride). Other material may also be used to prepare the mold. The concave surface of the plastic mold 1 may be a spheric or an aspheric surface or other designs or shapes. Materials for the lens may be HEMA, as described above, or other applicable materials.

At 104 the plastic mold 1 is spun at a determined speed such that the lens material 3 is spread to the concave surface of the plastic mold 1 and form a desired radius surface, due to the centrifugal force of the spinning. When contacted with the lens material 3, the pigment composition 2 will be dissolved in part or in whole into the lens material 3. The centrifugal force generated in the spinning and the shear stress of the lens material 3 make particles of the pigment composition 2 to distributed in the lens 3 in an unexpected manner. The distribution of the pigment particles 2 may be determined by some factors, including the particle size. During the grinding of the pigment, particle size of the pigment has a normal distribution from 1 µm to 10 µm, with the average size of about less than 5 µm. Since the weight of a pigment particle is W (weight) = V (volume) * D (density) and the density of the pigment particle is greater than that of the lens material, pigment particles with larger size tend to be distributed adjacent to the surface of the lens, away from the central of the lens. A lens 3 so prepared will perform a dazzling appearance with layers. More important is that the pigment particles will not be positioned at the liquid-spin fluid surface, i.e., the base curve of the lens. As a result, the pigment will be buried inside the lens. Safety is thus achieved.

In fig. 2, (b) shows a colored contact lens with a dazzling appearance being prepared

At 105 the ultra violet lamp 4 above the plastic mold 1 is turned on to solidify the lens material 3, and so the pattern of the pigment composition 2. The solidification is continued for about 2-10 minutes. At 106, stop the spinning and remove the plastic mold/lens assembly to an annealing chamber (not shown) to be annealed. At 107 edging of the lens is conducted and at 108 hydration and stripping are operated. A colored contact lens with a dazzling appearance is then accomplished. (c) of Fig. 2 shows a colored contact lens with a dazzling appearance prepared according to the method of this invention.

### EFFECTS OF THE INVENTION

The contact lens so prepared is observed under a microscope. The pigment and its pattern is distributed inside the lens. The lens has a smooth surface, without any defects. The lens shows a dazzling appearance.

The plastic mold after stripping is also observed under a microscope. The convex surface of the plastic mold appears clean and smooth. No residual of pigment is found.

The pigment that provide the colored, dazzling pattern is buried inside the lens material. No extrusions from the surface of the lens is found. The pigment won't shell out to cause damages to wearers of the lens.

The invented method is not only applicable to the spincasting approach, but also to the extrusion approach and other approaches. If the extrusion approach is applied, the mold and the die may rotate relatively to a certain angle. A pattern like astronomic locus is then accomplished.

**Table I**

| ratio color material | Crystal blue | Jade Green | Violet | Cappuccino or Hazel | Pearl Gray |
|---|---|---|---|---|---|
| Rutile TᵢO₂ | 0~30% | 0~35% | 0~45% | 0~20% | 0~35% |
| (C.I. pigment white 6) | | | | | |
| Phtalocyanine Blue | 3~15% | | | | 1~8% |
| (C.I. pigment Blue 15:4) | | | | | |
| Phtalocyanine Green | | 15~35% | | | |
| (C.I. pigment Green 7) | | | | | |
| Dioxazin Violet | | | 3~10% | | |
| (C.I. pigment Violet 23) | | | | | |
| Iron Oxide | | 0~5% | | 10~30% | |
| (C.I. pigment Yellow 42) | | | | | |
| (C.I. pigment Brown) | | | | 4~20% | 3~10% |
| Binding polymer | 30~75% | | | | |
| Dispersing agent | 5~40% | | | | |
| solvent (IPA) | 1~8% | | | | |

## Claims

1. A method for the preparation of colored contact lenses with a dazzling appearance, comprising the steps of:
- preparing a pigment composition;
- applying said pigment composition to a concave surface of a mold to form a pattern;
- dropping a quantitiy of lens material to said concave surface of said mold such that said pigment composition dissolves in part or in whole in said lens material;
- spinning said mold such that said lens material is spread on said concave surface of said mold to form a radius surface and such that particles of said pigment composition are moved into and distributed in said lens material during said spinning step due to the centrifugal forces and the shear stress of the lens material whereby to form a dazzling appearance; and
- solidifying said lens material and said pigment composition.

2. The method according to claim 1 wherein said pigment composition is applied to said concave surface of said mold by pad printing.

3. A method for the preparation of colored contact lenses with a dazzling appearance, comprising the steps of:
- preparing a pigment composition;
- applying said pigment composition to a concave surface of a mold to form a pattern;
- dropping a quantitiy of lens material to said concave surface of said mold such that said pigment composition dissolves in part or in whole in said lens material;
- applying a die with a convex surface corresponding to said concave surface of said mold such that said lens material forms a radius surface; and
- rotating said die and said mold relatively such that particles of said pigment composition are moved into and distributed in said lens material during said rotation of said die and said mold due to the centrifugal forces and the shear stress of the lens material whereby to form a dazzling appearance; and
- solidifying said lens material and said pigment composition.

4. The method according to claim 3, wherein said pigment composition is applied to said concave surface of said mold by pad printing.

## Patentansprüche

1. Verfahren zur Herstellung kolorierter Kontaktlinsen mit einem schillernden Erscheinungsbild, das die Schritte umfasst:
- Herstellen einer Pigmentkomposition;
- Aufbringen der Pigmentkomposition auf eine konkave Oberfläche einer Form derart, dass ein Muster gebildet wird;
- Tröpfeln einer Menge von Linsenmaterial auf die konkave Oberfläche der Form, so dass sich die Pigmentkomposition teilweise oder vollständig in dem Linsenmaterial auflöst;
- Schnelles Rotieren der Form, so dass sich das Linsenmaterial auf der konkaven Oberfläche der Form ausbreitet, um eine Oberfläche mit einem Radius zu bilden, und so, dass Partikel der Pigmentkomposition während des Rotationsschritts aufgrund von Zentrifugalkräften und der Scherspannung des Linsenmaterials in das Linsenmaterial hinein bewegt und darin verteilt werden, wodurch ein schillerndes Erscheinungsbild erzeugt wird; und
- Verfestigen des Linsenmaterials und der Pigmentkomposition.

2. Verfahren nach Anspruch 1, wobei die Pigmentkomposition durch Tampondruck auf die konkave Oberfläche der Form aufgebracht wird.

3. Verfahren zur Herstellung kolorierter Kontaktlinsen mit einem schillernden Erscheinungsbild, das die Schritte umfasst:
- Herstellen einer Pigmentkomposition;
- Aufbringen der Pigmentkomposition auf eine konkave Oberfläche einer Form derart, dass ein Muster gebildet wird;
- Tröpfeln einer Menge an Linsenmaterial auf die konkave Oberfläche der Form, so dass sich die Pigmentkomposition teilweise oder vollständig in dem Linsenmaterial auflöst;
- Anwenden eines Stempels mit einer konvexen Oberfläche, die der konkaven Oberfläche der Form entspricht, so dass das Linsenznaterial eine Oberfläche mit einem Radius bildet; und
- Rotieren des Stempels und der Form relativ zueinander, so dass Partikel der Pigmentkomposition aufgrund von Zentrifugalkräften und der Scherspannung des Linsenmaterials in das Linsenmaterial hinein bewegt und darin verteilt werden, wodurch ein schillerndes Erscheinungsbild erzeugt wird; und
- Verfestigen des Linsenmaterials und der Pigmentkomposition.

4. Verfahren nach Anspruch 3, wobei die Pigmentkomposition durch Tampondruck auf die konkave Oberfläche der Form aufgebracht wird.

## Revendications

1. Procédé de préparation de lentilles de contact colorées avec un aspect brillant, comprenant les étapes de :
- préparation d'une composition de pigment ;
- application de ladite composition de pigment à une surface concave d'un moule pour former un motif ;
- dépôt d'une quantité de matériau de lentille à ladite surface concave dudit moule de sorte que ladite composition de pigment se dissolve en partie ou complètement dans ledit matériau de lentille ;
- rotation dudit moule de sorte que ledit matériau de lentille est étendu sur ladite surface concave dudit moule pour former une surface de rayon et de sorte que les particules de ladite composition de pigment sont déplacées et distribuées dans ledit matériau de lentille au cours de ladite étape de rotation du fait des forces centrifuges et de la contrainte de cisaillement du matériau de lentille pour obtenir ainsi un aspect brillant ; et
- solidification dudit matériau de lentille et de ladite composition de pigment.

2. Procédé selon la revendication 1 dans lequel ladite composition de pigment est appliquée à ladite surface concave dudit moule par impression au tampon.

3. Procédé de préparation de lentilles de contact colorées avec un aspect brillant, comprenant les étapes de :
- préparation d'une composition de pigment ;
- application de ladite composition de pigment à une surface concave d'un moule pour former un motif ;
- dépôt d'une quantité de matériau de lentille à ladite surface concave dudit moule de sorte que ladite composition de pigment se dissolve en partie ou complètement dans ledit matériau de lentille ;
- application d'une matrice avec une surface convexe correspondant à ladite surface concave dudit moule de sorte que ledit matériau de la lentille forme une surface de rayon ; et
- rotation de ladite matrice et dudit moule de sorte que les particules de ladite composition de pigment sont déplacées et distribuées dans ledit matériau de lentille au cours de ladite rotation de ladite matrice et dudit moule du fait des forces centrifuges et de la contrainte de cisaillement du matériau de lentille pour former ainsi un aspect brillant ; et
- solidification dudit matériau de lentille et de ladite composition de pigment.

4. Procédé selon la revendication 3, dans lequel ladite composition de pigment est appliquée à ladite surface concave dudit moule par impression au tampon.
